(19) **Europäisches Patentamt / European Patent Office / Office européen des brevets**

(11) **EP 1 788 474 A1**

(12) **EUROPEAN PATENT APPLICATION**
published in accordance with Art. 158(3) EPC

(43) Date of publication:
**23.05.2007 Bulletin 2007/21**

(51) Int Cl.:
*G06F 3/033* (2006.01)     *G06F 15/02* (2006.01)

(21) Application number: **05783578.7**

(22) Date of filing: **08.09.2005**

(86) International application number:
**PCT/JP2005/016992**

(87) International publication number:
**WO 2006/028276 (16.03.2006 Gazette 2006/11)**

(84) Designated Contracting States:
**GB**

(30) Priority: **09.09.2004 JP 2004261943**

(71) Applicant: **MATSUSHITA ELECTRIC INDUSTRIAL CO., LTD.**
**Osaka 571-8501 (JP)**

(72) Inventor: **TOIYAMA, Keiichi**
**c/o Matsushita El. Ind. Co. Ltd.**
**Chuo-ku, Osaka-shi, Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54) **VIDEO DEVICE**

(57) A video device having a screen for displaying an image thereon scales up and down the image by actions, such as the moving of the device or the moving of the face of a user to the device. An image storage unit stores the image to be displayed. A movement detector detects movement of the video device. A position detector detects a position of a user. A pixel-converting display unit reads the image from the image storage unit, clip, scale up, and scale down a portion of the image based on the movement detected by the movement detector and the position detected by the position detector, and display the portion of the image.

## FIG. 1

100

101 Controller

102 Storage Unit

103 Image Storage Unit

108

104 Movement Detector

105 Viewpoint Detector

112

106 Pixel Converter

107 Image Display Unit

**Description**

TECHNICAL FIELD

The present invention relates to a video device which can be operated by a series of actions, such as the moving of the device or the moving of the face of a user to and from the device, as to scale up and down an image displayed thereon, without repeatedly manipulating buttons.

BACKGROUND OF THE INVENTION

Various portable viewers are known as mobile telephones or personal digital assistants (PDA).
A conventional portable viewer enables a user to view an image of a digital camera which contains the number of pixels exceeding pixels that of a display unit of the viewer by the following operations.
For viewing the image, various operations, such as scrolling, scaling up, and scaling down are performed with repetitive button control. If having a screen of 640 pixels along horizontal by 480 pixels along vertical, VGA standards, the display unit can display only 1/13 of pixels of a what 4-million pixel digital cameras is capable of capturing. The user views an image provided by down-sampling the image according to the resolution of the display unit, scaling up the image, and scrolling the image.

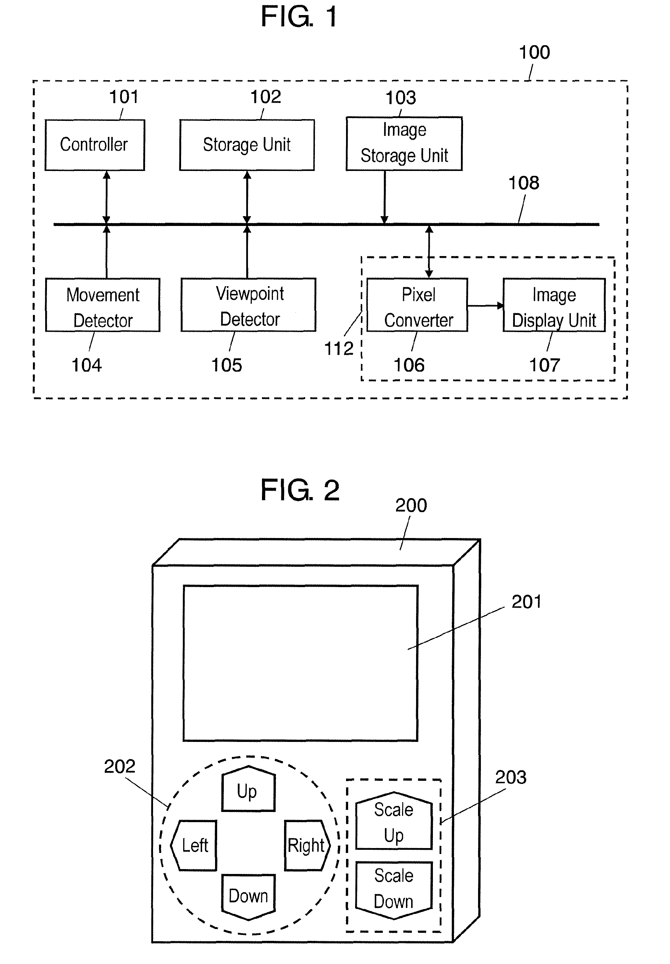

Fig. 2 illustrates a conventional portable viewer arranged for viewing an image through scrolling, scaling up, and scaling down.
The conventional portable viewer 200 includes display unit 201 for displaying the image, scroll buttons 202 for scrolling the image, and scaling-up and scaling-down buttons 203 for scaling up and down the image.
Upon viewing the image displayed on display unit 201, the user activates scaling up and down buttons 203 as to adjust an enlarging rate to a predetermined rate. Then, the user activates scroll buttons 202 to move the image to a predetermined position on the display unit. Thus, the user activates scroll buttons 202 and scaling up and down buttons 203 repetitively to allow the image to be displayed at the predetermined location and ratio.
However, according to the increase of the resolution of digital cameras, operations, such as scrolling, scaling up, and scaling down, increase, becoming troublesome. Portable viewers such as mobile telephones and PDAs have high performances for allowing the user to view HTML contents and spreadsheets, which have been viewed on screens of personal computers, on a small display. In response, a portable viewer includes a movement detector, device such as a mouse, for scrolling an image easily. Such portable viewer is disclosed in Japanese Patent Laid-Open Publication No.7-295937.
As described above, the user activates the scaling up and down buttons to view an image or HTML data having the number of pixels exceeding the resolution of the display unit of the portable viewer. That is, the image or text of the HTML data is scaled down to be displayed, and have accordingly small resolutions, accordingly having small visibility. The user repetitively executes the scrolling, scaling up, and scaling down the image according to contents of the image.

SUMMARY OF THE INVENTION

A video device according to the present invention scales up and down an image by actions, such as the moving of the device or the moving of the face of a user to and from the device. The video device includes an image storage unit, a movement detector, a position detector, and a pixel-converting display unit.
The image storage unit stores data of images to be displayed. The movement detector detects the movement of the video device. The position detector detects the position of a user. The pixel-converting display unit reads data of an image from the image storage unit, clips a portion from the image based on the movement detected by the movement detector and on the position detected by the position detector, scaling up and down the clipped portion of the image, and display it.

BRIEF DESCRIPTION OF THE DRAWINGS

Fig. 1 illustrates an arrangement of a portable viewer according to Exemplary Embodiment 1 of the present invention.
Fig. 2 illustrates a conventional portable viewer for performing scrolling, scaling up, and scaling down of an image.
Fig. 3 is a perspective view of a front side of the portable viewer of Embodiment 1.
Fig. 4 is a perspective view of a back side of the portable viewer according to Exemplary Embodiments 1, 2, and 3.
Fig. 5 illustrates a movement detector according to Embodiments 1, 2, and 3.
Fig. 6 illustrates a procedure of detecting movement executed by the movement detector according to Embodiment 1.

Fig. 7 illustrates a viewpoint detector according to Embodiment 1.

Fig. 8 is a flowchart of a procedure for detecting a viewpoint executed by the viewpoint detector according to Embodiment 1.

Fig. 9 illustrates a display unit according to Embodiments 1, 2, and 3.

Fig. 10 illustrates a screen notifying the user of reaching of an end of the image according to Embodiments 1, 2, and 3.

Fig. 11 illustrates a pixel converter according to Embodiment 1.

Fig. 12 is a flowchart of a procedure of converting pixels executed by the pixel converter according to Embodiment 1.

Fig. 13 illustrates an arrangement of a portable viewer according to Embodiment 2.

Fig. 14 is a perspective view of a front side of the portable viewer according to Embodiment 2.

Fig. 15 illustrates a pixel converter according to Embodiment 2.

Fig. 16 is a flowchart of a procedure for converting pixels executed by the pixel converter according to Embodiment 2.

Fig. 17 illustrates an arrangement of a portable viewer according to Embodiment 3.

Fig. 18 is a perspective view of a front side of the portable viewer according to Embodiment 3.

Fig. 19 illustrates a pixel converter according to Embodiment 3.

Fig. 20 is a flowchart of a procedure for storing data of a reference viewpoint executed by the pixel converter according to Embodiment 3.

Fig. 21 is a flowchart of a procedure for converting pixels executed by the pixel converter according to Embodiment 3.

## DETAIL DESCRIPTION OF THE PREFERRED EMBODIMENTS

Exemplary Embodiment 1

A video device, a portable viewer, according to Exemplary Embodiment 1 of the present invention will be described. The portable viewer is a video device, such as a mobile telephone or a PDA, for displaying images or HTML documents.

While the portable viewer will be described below, the present invention may be applied to a non-portable or large sized video device (for example, a large-screen liquid crystal display or plasma display television set).

Fig. 1 illustrates an arrangement of the portable viewer according to Embodiment 1.

A controller 101 controls the entire operation of the portable viewer 100 and has data stored in a storage unit 102. An image storage unit 103 stores images to be displayed on the portable viewer 100. The image storage unit 103 according to this embodiment may be a flash memory.

A movement detector 104 detects the movement of the portable viewer. The movement detector 104 according to this embodiment has an arrangement similar to that of a mouse for a personal computer. A viewpoint detector 105 functions as a position detector to detect the viewpoint of a user. According to this embodiment, a CCD camera is employed for measuring the distance between the portable viewer and the face of the user to detect the viewpoint of the user.

A pixel converter 106 reads the images stored in the image storage unit 103. The pixel converter 106 cuts a portion of an image based on the movement detected by the movement detector 104 and the position of the viewpoint detected by the viewpoint detector 105, converts the resolution of the cut portion of the image, and scales up and down and outputs the converted portion of the image.

An image display unit 107 displays data of the image received from the pixel converter 106. The above described components are connected to one another with a bus line 108.

The image display unit 107 and the pixel converter 106 may be combined to a pixel-converting display unit 112.

The image storage unit 103 may include a storage medium, such as an HDD or a memory card.

The movement detector 104 may be implemented by a movement detecting device, such as a gyro.

The viewpoint detector 105 may be a distance measuring device with using infrared ray.

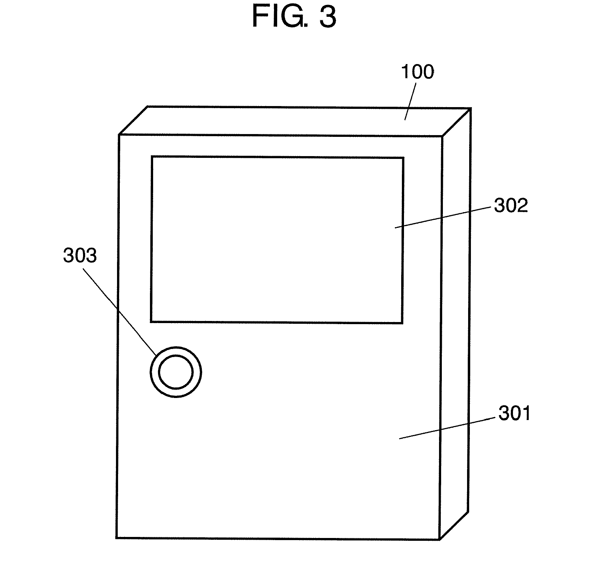

A front side of the portable viewer will be explained with referring to Fig. 3.

The front side 301 of the portable viewer 100, upon being used, faces the face of the user. The image display unit 107 has a display screen 302 for displaying an image.

The portable viewer 100 includes a CCD camera 303 as a camera unit.

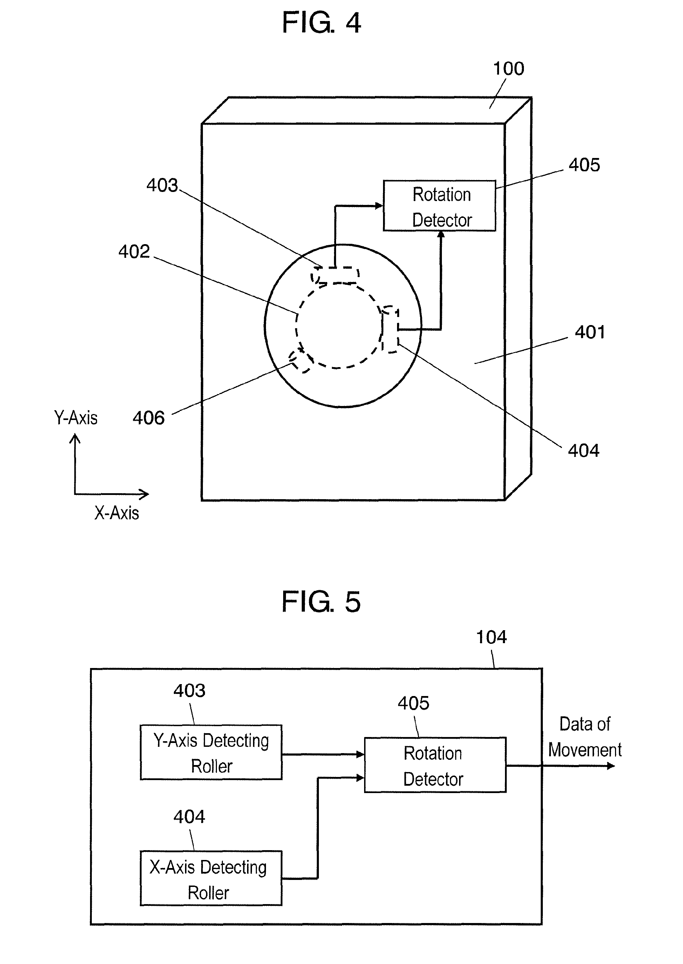

A back side 401 of the portable viewer 100 will be explained with referring to Fig. 4.

The back side 401 of the portable viewer 100, upon being used, is placed on a flat plane, such as a desk. A ball 402 rotates when the portable viewer move. When the portable viewer moves in the Y-axis direction, the ball 402 rotates. The rotation of the ball 402 is transmitted to a Y-axis detecting roller 403 to have roller 403 rotate. Similarly, when the portable viewer moves in the X-axis direction, the ball 402 rotates. The rotation of the ball 402 is transmitted to an X-axis detecting roller 404 to have roller 404 rotate. A rotation detector 405 detects the rotations of the Y-axis detecting roller 403 and the X-axis detecting roller 404, and output data of the movement. A ball supporting roller 406 supports the ball 402 as to cause the ball 402 to contact the Y-axis detecting roller 403 and the X-axis detecting roller 404.

The movement detector 104 will be explained with referring to Fig. 5.

The movement detector 104 includes the Y-axis detecting roller 403, the X-axis detecting roller 404, and the rotation detector 405. The rotation detector 405 detects data corresponding to the rotation of the Y-axis detecting roller 403 and the rotation of the X-axis detecting roller 404. The rotation detector 405 sends, to the pixel converter 106 shown in Fig. 1, the data of the movement produced based on the data corresponding to the rotation.

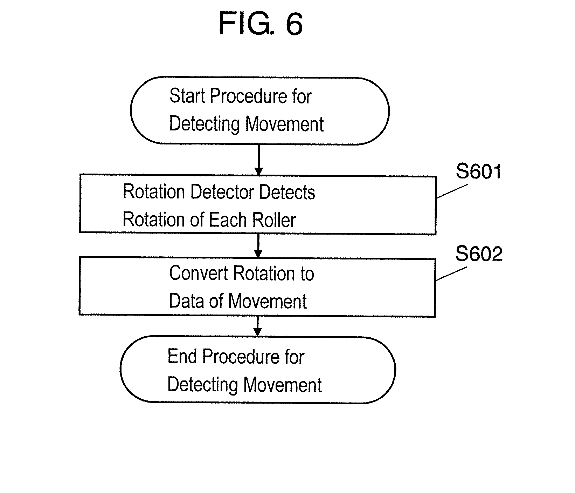

A procedure of detecting the movement executed by the movement detector 104 will be described with referring to Fig. 6.

The user moves the portable viewer on the flat plane, accordingly causing the Y-axis detecting roller 403 and the X-axis detecting roller 404 to rotate. The rotation is detected by the rotation detector 405 (Step S601).

Then, the rotation detector 405 converts respective rotation angles of the rollers into the data of the movement, and outputs the data of the movement (Step S602).

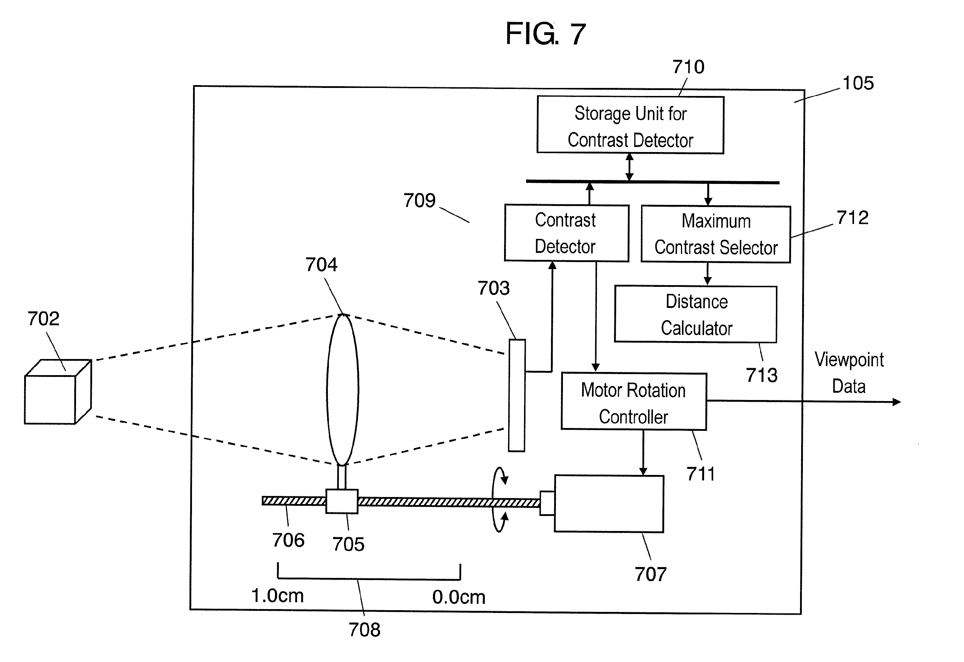

The viewpoint detector 105 will be described in detail with referring to Fig. 7.

According to this embodiment, the distance between the portable viewer 100 and the face of the user is measured with the CCD and a lens mounted to the front of the CCD. The viewpoint detector 105 detects an object 702. The object 702 is the face of the user.

The CCD 703 converts light input thereto into an image signal. The lens 704 is arranged so that the image of the object 702 is focused on the CCD 703. The lens 704 is mounted to a lens mounter 705. The mounter 705 moves to left and right according to the rotation of shaft 706 linked to the mounter. The shaft 706 is driven by a motor 707 for moving the lens. The lens 704 moves when the motor 707 rotates.

According to the rotation of the motor 707, the lens 704 moves within a lens stroke 708. The maximum width of the stroke 708 is called as a maximum stroke. The maximum distance of the lens represents the position of the lens closest to the object 702. The minimum distance of the lens represents the position of the lens closest to the CCD 703. The lens stroke according to this embodiment is maximum 1.0cm. A contrast detector 709 generates contrast values based on the image signal output from the CCD 703. A storage unit 710 for the contrast detector stores the contrast values generated by the contrast detector 709 and data of the position of the lens 704.

A motor rotation controller 711 controls the rotation of the motor 707, upon receiving a command from the contrast detector 709. A maximum contrast selector 712 selects the maximum value from the contrast values stored in the storage unit 710. A distance calculator 713 receives the position of the lens 704 from the maximum contrast selector 712, and converts the data of the position into data of a distance between the object 702 and the lens 704, then outputting the data of the distance as viewpoint data. That is, when the contrast value is the maximum value, it is judged that the object 702 is focused, and a focal distance corresponds to the viewpoint data.

The CCD camera according to this embodiment includes the lens 704 and the CCD 703.

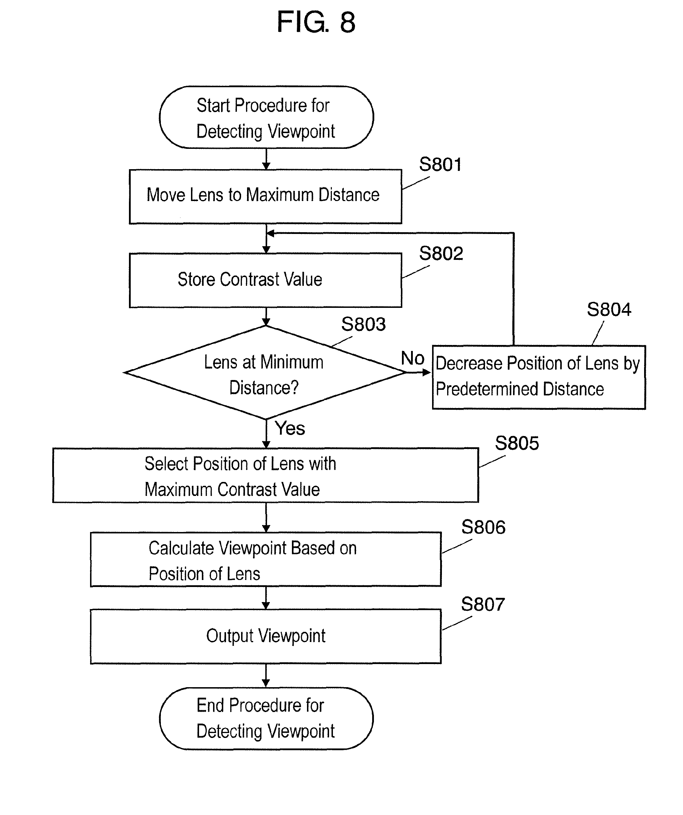

A procedure for detecting the viewpoint executed by the viewpoint detector 105 will be described with referring to Fig. 8.

Upon the procedure for detecting the viewpoint starting, the contrast detector 709 requests the motor rotation controller 711 to control the motor at Step S801. In response, the motor rotation controller 711 directs the motor 707 to move the lens 704 to the maximum distance, and stores data of the position of the lens 704 in the storage unit 710 for the contrast detector (Step S801).

Then, the contrast detector 709 detects a contrast value based on the image signal generated by the CCD 703, and stores data of the position of the lens and the contrast value in the storage unit 710 while linking the data of the position with the contrast value (Step S802).

Then, the contrast detector 709 reads the data of the position of the lens from the storage unit 710, and judges whether the lens 704 is located at the minimum distance or not (Step S803).

Upon judging at Step S803 that the lens 704 is not located at the minimum distance, the contrast detector 709 instructs the motor rotation controller 711 to decrease the position of the lens by a predetermined distance (Step S804).

According to this embodiment, the predetermined distance by which the position of the lens changes at Step S803 is 0.1 cm. If the lens is not located at the minimum position, the procedure advances from Step S804 to Step S802.

If judging at Step S803 that the lens 704 is located at the minimum position, the maximum contrast selector 712 selects data of the position of the lens linked with the maximum contrast value stored in storage unit 710, and outputs the data to the distance calculator 713 (Step S805).

Then, the distance calculator 713 calculates the viewpoint data from the lens position data (Step S806).

Then, the distance calculator 713 outputs the viewpoint data to the pixel converter 106 (Step S807).

A table used for calculating the viewpoint data at Step S806 in the distance calculator 713 will be explained with referring to Table 1.

The positions of the lens are shown as distances from the origin where the position is closest to the CCD 703. The focal distances corresponding to the positions of the lens are shown.

The distance calculator 713 selects, from the left column of Table 1, the data of the position of the lens output from the maximum contrast selector 712. The distance calculator 713 takes the focal distance from the right column of Table 1 corresponding to the selected data of the position of the lens data, and outputs the focal distance as the viewpoint data to the pixel converter 106.

Table 1

| Position of Lens (cm) | Focal Distance (cm) |
|---|---|
| 0 | 0 |
| 0.1 | 5 |
| 0.2 | 10 |
| 0.3 | 15 |
| 0.4 | 20 |
| 0.5 | 25 |
| 0.6 | 30 |
| 0.7 | 35 |
| 0.8 | 40 |
| 0.9 | 45 |
| 1 | 50 |

A table used for calculating a scale factor in the pixel converter 106 will be explained with referring to Table 2.

The viewpoint data is output from the distance calculator 713 in the viewpoint detector 105. The scale factor is shown corresponding to the viewpoint data in the left column. For example, if the viewpoint is measured as 20 cm, the scale factor to be used in the pixel converter 106 is 0.64.

According to this embodiment, the scale factor of an image changes according to the viewpoint. The data of the position of the lens is converted into the focal distance. The focal distance is used as the viewpoint data to determine the scale factor. Alternatively, the data of the position of the lens may be converted directly into the scale factor.

Table 2

| Viewpoint (cm) | Scale Factor (times) |
|---|---|
| 0 | 1 |
| 5 | 1 |
| 10 | 1 |
| 15 | 0.8 |
| 20 | 0.64 |
| 25 | 0.51 |
| 30 | 0.41 |
| 35 | 0.32 |
| 40 | 0.26 |
| 45 | 0.26 |
| 50 | 0.26 |

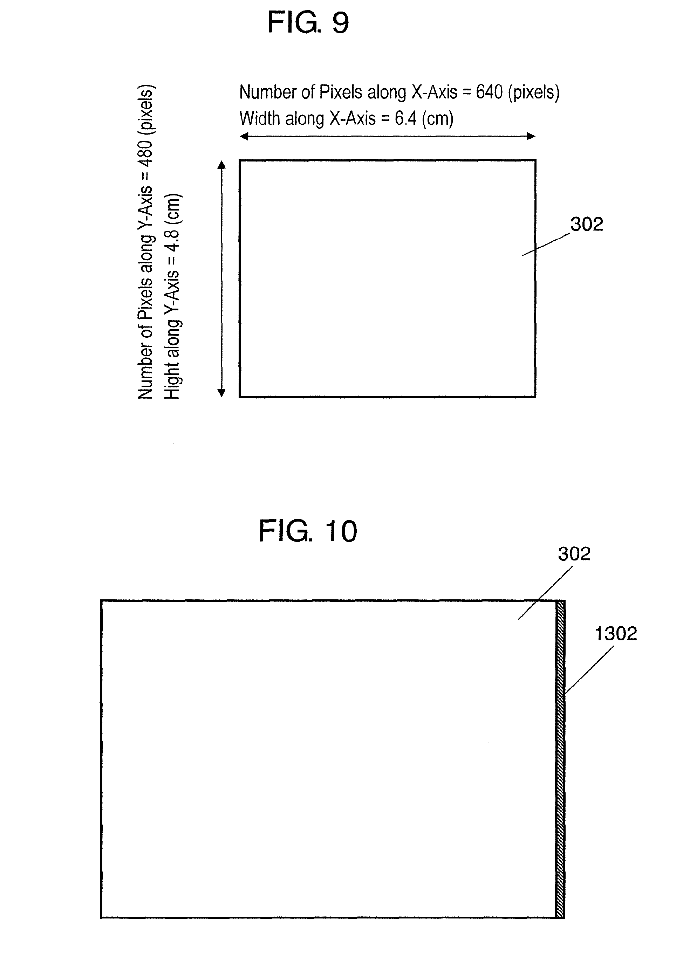

The image display unit 107 will be explained with referring to Fig. 9.

The image display unit 107 according to this embodiment is a liquid crystal display having a resolution of 640 pixels along the X-axis by 480 pixels along the Y-axis. The display screen 302 has a width of 6.4 cm along the X-axis and a height of 4.8 cm along the Y-axis. The explanation in this embodiment is applicable to any display of a different type having a different resolution and/or a different size.

According to this embodiment, the display screen 302 cannot display an image having pixels exceeding 640 pixels along the X-axis by 480 pixels along the Y-axis as it is. This image can be displayed partially or can be displayed by scaling down the image as to have the image not larger than a size of 640 pixels along the X-axis by 480 pixels along the Y-axis. If the image is displayed partially, the image is not displayed entirely. If the image is scaled down, a detail of the image is lost. It is hence necessary for the user to often executes scrolling, scaling up, and scaling down the image.

For example, an image of a digital camera of two million pixels has a size of 1600 pixels along the X-axis by 1200 pixels along the Y-axis. Upon displayed on the image display unit 107, a portion of the image only about 1/6, as an area ratio, of its entire area can be displayed, thus preventing the image from being entirely viewed easily. Upon being scaled down, the image is displayed at a resolution reduced to 1/6 of that of the image, thus losing its details.

According to this embodiment, an image can be displayed by determining the number of pixels and the position to be clipped from the image, as explained below. This operation enables the user to operate the portable viewer easily as to view the image.

An operation of the pixel converter 106 for calculating the number of pixels and the position to be clipped from the image will be explained with referring to Equations 1 and 2.

The number of pixels to be clipped is provided by dividing the resolution of the image display unit 107 by the scale factor. If the viewpoint is detected as 20 cm and the scale factor is calculated as 0.64, a size to be clipped along the X-axis is determined as 1000 pixels provided by dividing 640 pixels divided by 0.64 while a size to be clipped along the Y-axis is determined as 750 pixels provided by dividing 480 pixels by 0.64.

The position to be clipped is expressed by coordinates of pixels from which the clipping by the pixel converter 106 starts along both the X-axis and the Y-axis in the image.

According to this embodiment, the position to be clipped is expressed as to the upper left of the image to be clipped, and however, may be expressed as the upper right, the lower left, the lower right, or a position of the image predetermined arbitrarily.

According to this embodiment, the upper left of the clipped image represents the origin, and values along the X-axis and Y-axis increase towards the right and left, respectively.

The position of start clipping the image is calculated with using the following equations.

$$CPY=(RY/2)+((MY/DSY)\times DRY\div ER)-((DRY/2)\div ER) ... \text{(Equation 1)}$$

$$CPX=(RX/2)+((MX/DSX)\times DRX\div ER)-((DRX/2)\div ER) ... \text{(Equation 2)}$$

where CPY is the position (pixel) of start clipping along the Y-axis, RY is the resolution (pixels) of the image along the Y-axis, MY is the distance of the movement along the Y-axis (cm), DSY is the size of the display unit along the Y-axis (cm), DRY is the resolution (pixels) of the display unit along the Y-axis, ER is the scale factor, CPX is the position (pixel) of start clipping along the X-axis, RX is the resolution (pixels) of the image along the X-axis, MX is the distance of the movement along the X-axis (cm), DSX is the size of the display unit (cm) along the X-axis, and DRX is the resolution (pixels) of the display unit along the X-axis. The "(pixels)" and "(cm)" are units.

For example, the resolution of the image along the X-axis is 1600 pixels, the resolution of the image along the Y-axis is 1200 pixels, the distances of the movement along the Y-axis and the X-axis detected by the movement detector 501 are 1.6 cm (towards the lower) and -1.28 cm (towards the left), respectively, the sizes of the display unit along the X-axis and the Y-axis are 6.4 cm and 4.8 cm, respectively, the resolutions of the display unit along the X-axis and the Y-axis are 640 pixels and 480 pixels, respectively, and the scale factor is 0.64. Then, the position of start clipping is the 475th pixel along the Y-axis and the 100th pixel along the X-axis.

According to Equations 1 and 2, the position of start clipping may be smaller than zero or exceed the size of the image. In this case, in order to notify the user of reaching the edge of the image, the side of the display screen 302 corresponding to the reached edge of the image may be colored, as shown in Fig. 10.

In Fig. 10, a colored region 1302 at the side of the display screen 302 is colored.

Fig. 10 illustrates that the displayed image reaches the right edge of the image.

The user may be notified of reaching of the edge of the image with using a text or a graphic symbol, providing the same effects. The user may be notified of that with a background color or a predetermined pattern added to the image.

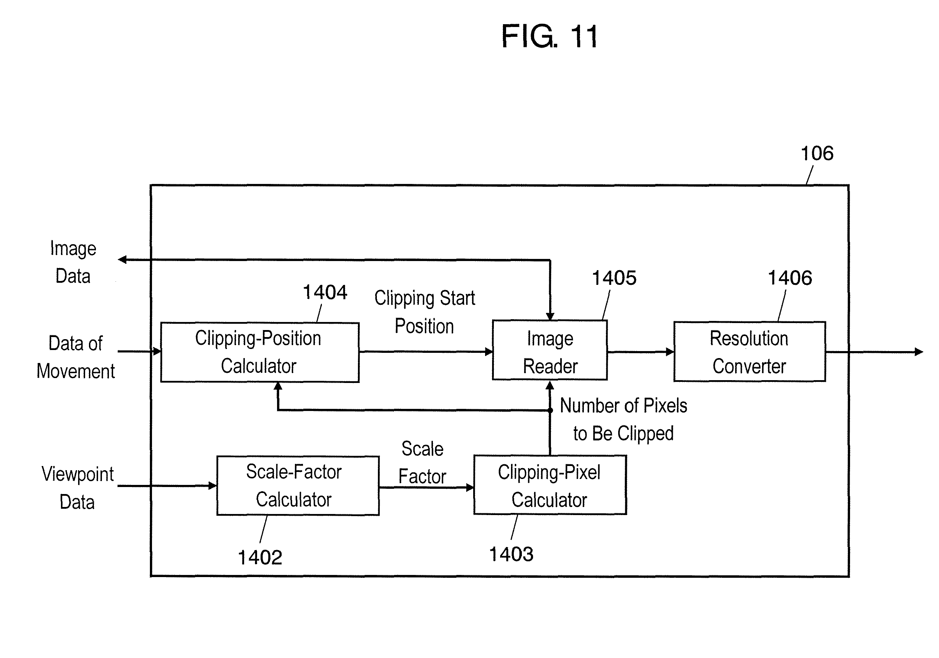

The pixel converter 106 shown in Fig. 1 will be described in more detail with referring to Fig. 11.

The pixel converter 106 includes a clipping-position calculator 1404, a scale-factor calculator 1402, a clipping-pixel calculator 1403, an image reader 1405, and a resolution converter 1406.

The scale-factor calculator 1402 calculates the scale factor based on the viewpoint data produced by the viewpoint detector 105.

The clipping-pixel calculator 1403 calculates the number of pixels to be clipped from the image based on the scale factor output from the scale-factor calculator 1402 and the resolution of the image display unit 107. The clipping-position calculator 1404 calculates the position of start clipping the image based on the data of the movement output from the movement detector 104 and the number of pixels to be clipped output from the clipping-pixel calculator 1403.

The image reader 1405 reads, from the image storage unit 103, a portion of the image having pixels specified by the position of start clipping output from the clipping-position calculator 1404 and the number of clipped pixels output from the clipping-pixel calculator 1403. The resolution converter 1406 converts the image output from the image reader 1405 into an image having the resolution of the image display unit 107.

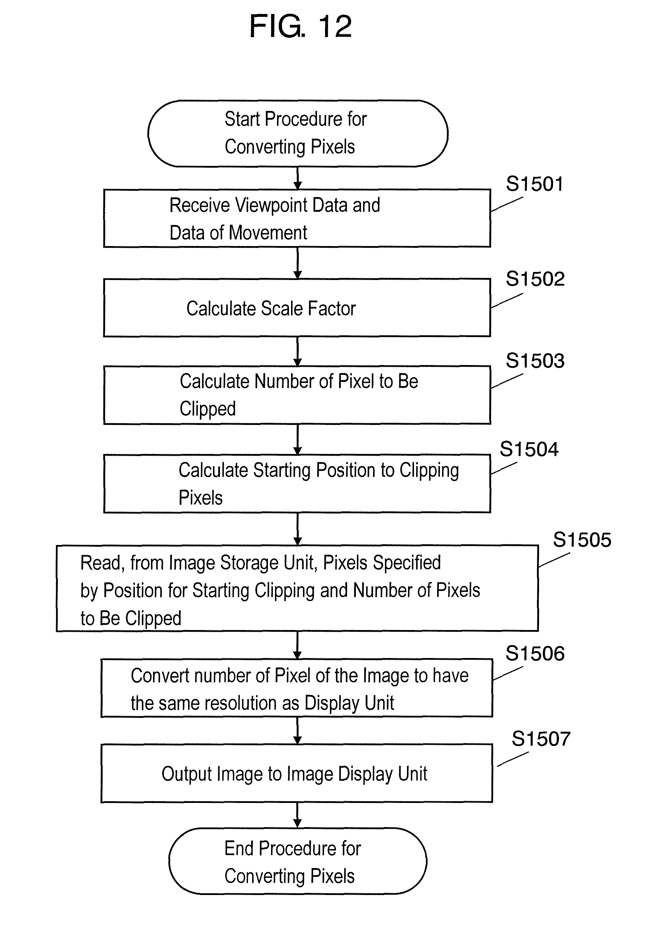

A procedure of converting the pixels in the pixel converter 106 will be explained with referring to Fig. 12.

The pixel converter 106 receives the viewpoint data from the viewpoint detector 105, and receives the data of the movement from the movement detector 104 (Step S1501).

Then, the pixel converter 106 calculates the scale factor based on the data of the movement received from the movement detector 104 (Step S1502).

Then, the pixel converter 106 calculates the number of pixels to be clipped (Step S1503).

Then, the pixel converter 106 calculates the position of start clipping the image(Step S1504).

Then, the pixel converter 106 reads, from the image storage unit 103, the portion of the image specified by the size to be clipped calculated at Step S1503 and the position of start clipping the image calculated at Step S1504 (Step S1505).

Then, the pixel converter 106 converts the image read at Step S1505 into an image having the resolution of the image display unit 107 (Step S1506).

Then, the pixel converter 106 outputs the image converted at Step S1506 to the image display unit 107 (Step S1507).

As described, the portable viewer according to this embodiment includes the movement detector, such as a mouse, and the viewpoint detector, such as a CCD camera. This structure allows the user to scroll the image by moving the portable viewer. The user can scale up and down the image by performing general actions, such as moving his/her face to and away from the portable viewer. The distance of the scrolling on the screen may be equal to the actual movement of the portable viewer. This operation allows the user to feel as if he/she views the image through a small window provided in the portable viewer.

The viewpoint detector 105 may be an infrared-ray transceiver which detects the distance between the viewpoint detector 105 and the object 702 based on a period of time from transmitting of infrared ray to the receiving of infrared ray reflected on the object 702, such as the face of the user. In this case, the CCD camera 303 in the portable viewer 100 shown in Fig. 3 is replaced by the infrared ray transceiver.

As described above, the portable viewer according to this embodiment can be operated by a series of actions, such as the moving of the portable viewer or the moving of the face of the user to and away from the portable viewer, to scroll, scale up, and scale down the displayed image without repetitive manipulating of buttons.

According to the embodiment, the distance between the portable viewer and the object 702 (the face of a user according to this embodiment) is calculated from the contrast value. According to the present invention, the distance may be detected by any other method applicable for determining the distance between the portable viewer and the face of the user.

For example, the image signal output from the CCD 703 is analyzed and processed by software to recognize the outline of the face or the shape of eyes, and a table including the size of the outline or the shape and the distance corresponding to the size is prepared. The distance between the portable viewer and the face or eyes of the user may be measured with referring to this table. The analyzing of the outline of the face of the user allows the distance to be measured accurately. If the distance is measured based on the analyzing of the shape of the eyes of the user, the image can be processed based on the distance between the portable view and the eyes of the user. This process allows the user to feel as if he/she views the image through a small window provided in the portable viewer.

Exemplary Embodiment 2

A portable viewer according to Exemplary Embodiment 2 will be described similarly to Embodiment 1. The portable viewer according to Embodiment 2, similar to that of Embodiment 1, is a video device, such as a portable telephone or a PDA, which displays image data as well as HTML text data.

In the portable viewer according to Embodiment 2, the arrangement of a back side of the viewer, a movement detector, a procedure for detecting the movement executed by the movement detector, a viewpoint detector, a procedure for detecting a view point executed by the viewpoint detector, a table used by a distance calculator for calculating a focal distance, a table used by a pixel converter for calculating a scale factor, an image display unit, and a pixel converter for calculating the number of pixels to be clipped and a position of start clipping the image are identical to those of Embodiment 1 as shown in Figs. 4, 5, 6, 7, 8, 9, and 10, Tables 1 and 2, and Equations 1 and 2, and their description will be omitted.

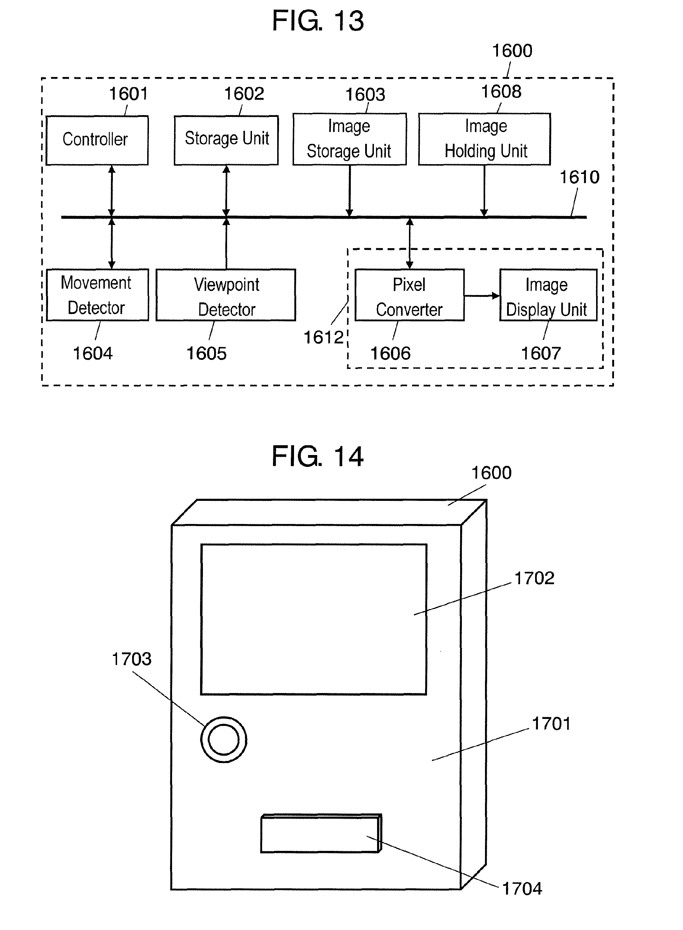

Fig. 13 illustrates an arrangement of the portable viewer according to Embodiment 2.

A controller 1601 controls the entire operation of the portable viewer 1600.

The controller 1601 stores data in a storage unit 1602. An image storage unit 1603 stores images to be displayed on the portable viewer 1600. The image storage unit 1603 according to this embodiment may be a flash memory. A movement detector 1604 detects the movement of the portable viewer 1600.

The movement detector 1604 according to this embodiment may have a structure of a mouse of a personal computer. A viewpoint detector 1605 functions as a position detector for detecting a viewpoint of a user. According to this embodiment, a CCD camera is employed for measuring the distance between the portable viewer and the face of the user to detect the viewpoint of the user.

A pixel converter 1606 reads an image stored in the image storage unit 1603. Based on data of the movement detected by the movement detector 1604 and data of the viewpoint detected by the viewpoint detector 1605, the pixel converter 1606 clips a portion of the image, converts the resolution of the clipped portion of the image, and scales up and down the converted portion of the image, and then, outputs the portion of the image.

An image display unit 1607 displays the image output from the pixel converter 1606. The above described units are connected to one another with a bus line 1610.

The image display unit 1607 and the pixel converter 1606 may be included in a pixel-converting display unit 1612.

An image holding unit 1608 includes a button to be pressed down by the user.

Upon the user pressing the button, the image holding unit 1608 instructs the pixel converter 1606 to stop updating the data of the movement and viewpoint data.

The image storage unit 1603 may include a storage medium, such as an HDD or a memory card.

The movement detector 1604 may be a movement detecting device, such as a gyro.

The viewpoint detector 1605 may include a distance measuring device with using infrared ray.

A front side of the portable viewer will be explained with referring to Fig. 14. The user faces the front side 1701 of the portable viewer 1600 while using the viewer.

The image display unit 1607 has a display screen 1702 displaying an image thereon.

The portable viewer 1600 includes a CCD camera 1703.

The image holding unit 1608 includes an operation device 1704, such as a button.

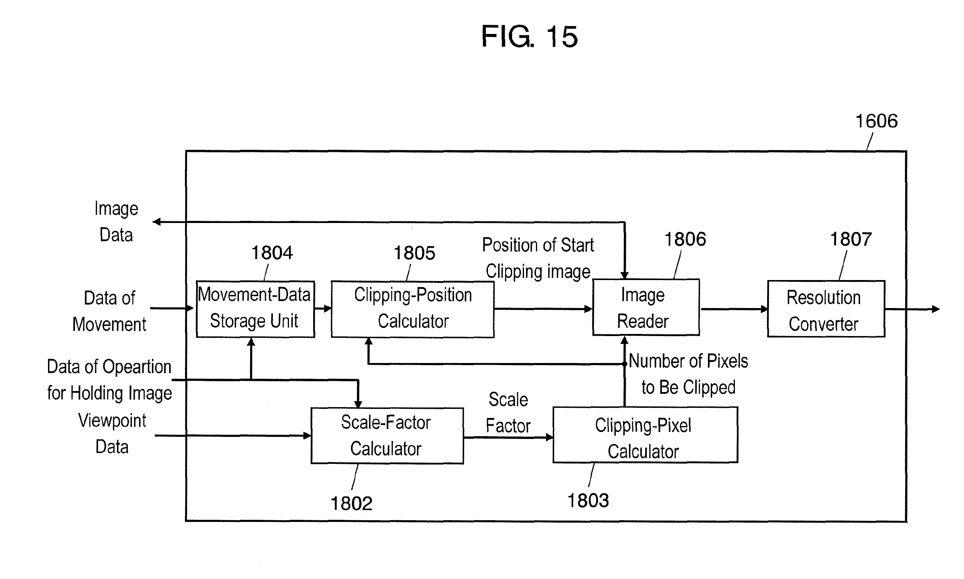

The pixel converter 1606 will be described in more detail with referring to Figs. 13 to 15.

The pixel converter 1606 includes a movement-data storage unit 1804, a clipping-position calculator 1805, a scale-factor calculator 1802, a clipping-pixel calculator 1803, an image reader 1806, and a resolution converter 1807.

The scale-factor calculator 1802 calculates a scale factor based on the viewpoint data output from the viewpoint detector 1605 if the operation device 1704 in the image holding unit 1608 is not pressed.

The clipping-pixel calculator 1803 calculates the number of pixels to be clipped from the image based on the scale factor output from the scale-factor calculator 1802 and the resolution of the image display unit 1607. The movement-data storage unit 1804 stores the data of the movement received from the movement detector 1604.

In the case of new movement data is received, when the operation device 1704 of the image holding unit 1608 is not pressed, the data of the movement stored in the movement-data storage unit 1804 is updated.

In the case of new movement data is received, when the operation device 1704 of the image holding unit 1608 is pressed, the data of the movement stored in the movement-data storage unit 1804 is not updated.

Then, the movement-data storage unit 1804 outputs the data of the movement. The clipping-position calculator 1805 calculates a position of start clipping the image based on the data of the movement output from the movement-data storage unit 1804 and the number of pixels to be clipped output from the clipping-pixel calculator 1803. The image reader 1806 reads, from the image storage unit 1603, a portion of the image having pixels specified by the position of start clipping the image received from the clipping-position calculator 1805 and the number of the clipped pixels received from the clipping-pixel calculator 1803.

The resolution converter 1807 converts the image output from the image reader 1806 into an image having the resolution of the image display unit 1607.

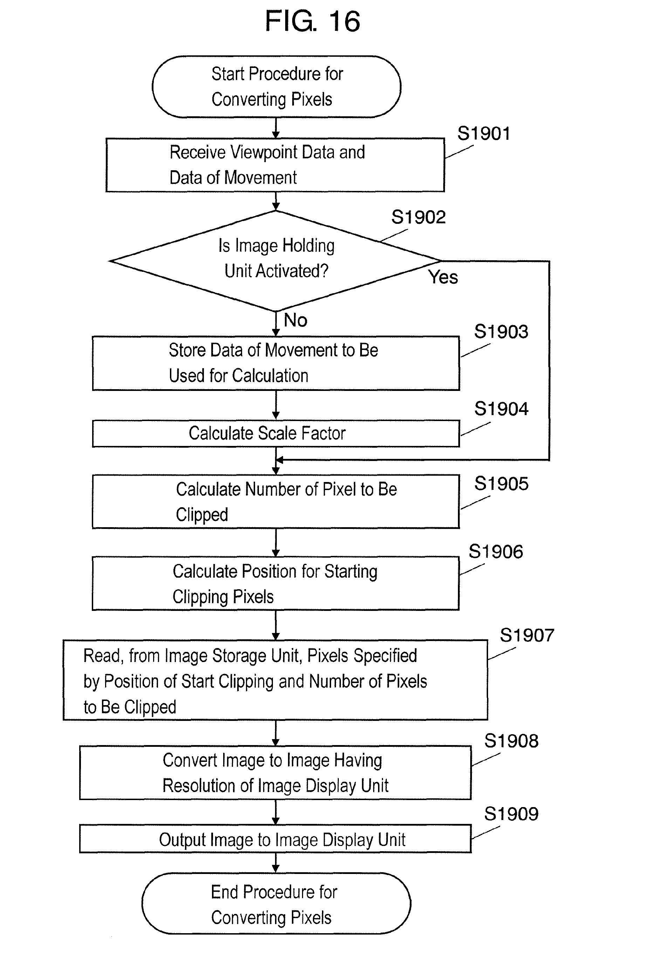

A procedure for converting the pixels executed by the pixel converter 1606 will be explained with referring to Fig. 16.

Firs, the movement-data storage unit 1804 receives the data of the movement from the movement detector 1604. The scale-factor calculator 1802 receives the viewpoint data from the viewpoint detector 1605 (Step S1901).

The movement-data storage unit 1804 judges whether the operation device 1704 of the image holding unit 1608 is pressed or not (Step S1902).

When it is judged at Step S1902 that the image holding unit 1608 is not pressed, the movement-data storage unit 1804 stores the data of the movement if the movement-data storage unit 1804 does not store the data of the movement.

If the movement-data storage unit 1804 stores the data of the movement, the storage unit 1804 updates the stored data of the movement (Step S1903).

Then, the scale-factor calculator 1082 calculates a scale factor based on the data of the movement output from the movement detector 1604 (Step S1904).

If it is judged at Step S1902 that the image holding unit 1608 is pressed, the procedure advances to Step S1905.

The clipping-pixel calculator 1803 calculates the number of pixels to be clipped based on the scale factor output from the scale-factor calculator 1802 (Step S1905).

Then, the clipping-position calculator 1805 calculates the position of start clipping the image (Step S1906).

Then, the image reader 1806 reads, from the image storage unit 1603, a portion of the image having the pixels of which number is the number to be clipped calculated at Step S1905 from the position of start clipping the image calculated at Step S1906 (Step S1907).

Then, the resolution converter 1807 converts the image clipped at Step S1907 into an image having the resolution of the image display unit 1607 (Step S1908).

Then, the resolution converter 1807 outputs the image converted at Step S1908 to the image display unit 1607 (Step S1909).

By this procedure, when the switch 1701 of the image holding unit 1608 is not pressed, the portable viewer converts the pixels based on the received data of the movement and the received viewpoint data. If the switch 1701 is pressed, the portable viewer converts the pixels based on the data of the movement which has been used in this procedure and the received viewpoint data.

As described above, the user can stop updating the data of the movement when he/she presses the operation device 1704 of the image holding unit 1608. In other words, the user can move the portable viewer to a position where the viewer is easily operated without changing the displaying scaling factor and clipping position of that moment.

As described above, the portable viewer according to this embodiment further includes the image holding unit 1608, and the pixel converter further includes the movement-data storage unit 1804 in addition to the portable viewer according to Embodiment 1.

This structure allows the user to scroll the image by moving the portable viewer. The user can scale up and down the image just by moving his/her face to and away from the portable viewer. The user can stop updating the data of the movement data and the viewpoint data by activating the image holding unit, such as the button. The user can move the portable viewer to a location easy to use without changing the range of an image displayed at this moment.

Exemplary Embodiment 3

A portable viewer according to Exemplary Embodiment 3 will be described similarly to Embodiments 1 and 2. The portable viewer is a video device, such as a portable telephone or a PDA, which displays image data as well as HTML text data.

In the portable viewer according to Embodiment 3, the arrangement of a back side of the viewer, a movement detector, a procedure for detecting the movement executed by the movement detector, a viewpoint detector, a procedure for detecting a viewpoint executed by the viewpoint detector, a table used by a distance calculator for calculating a focal distance, a table used by a pixel converter for calculating a scale factor, an image display unit, and a pixel converter for calculating the number of pixels to be clipped and a position of start clipping the image are identical to those of Embodiment 1 as shown in Figs. 4, 5, 6, 7, 8, 9, and 10, Tables 1 and 2, and Equations 1 and 2, and their description will be omitted.

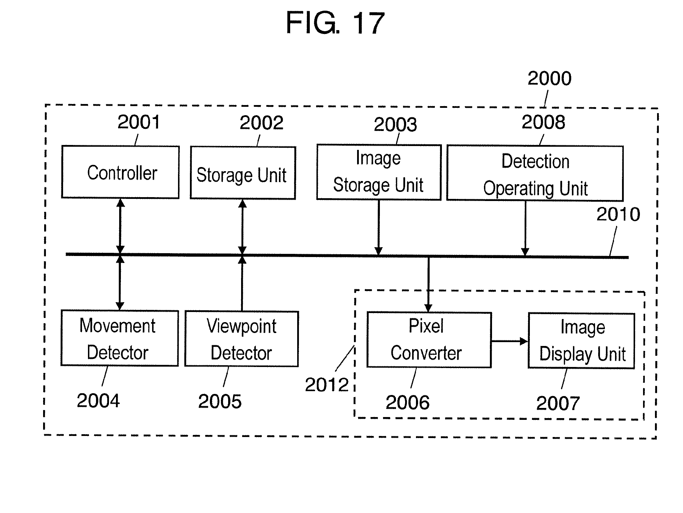

Fig. 17 illustrates an arrangement of the portable viewer 2000 according to Embodiment 3.

A controller 2001 controls the portable viewer 2000 entirely.

The controller 2001 stores data in a storage unit 2002. An image storage unit 2003 stores an image to be displayed on the portable viewer 2000. The image storage unit 2003 according to this embodiment may be a flash memory. A movement detector 2004 detects the movement of the portable viewer 2000.

The movement detector 2004 according to this embodiment may have a structure similar to that of a mouse of a personal computer. A viewpoint detector 2005 functions as a position detector to detect viewpoint data of a viewpoint of the user. According to this embodiment, a CCD camera is used for measuring the distance between the portable viewer and the face of the user to detect the viewpoint of the user.

A pixel converter 2006 reads the image stored in the image storage unit 2003. Based on data of the movement detected by the movement detector 2004 and the viewpoint data detected by the viewpoint detector 2005, the pixel converter 2006 clips a portion of the image, converts the resolution of the clipped portion of the image, scales up and down the clipped portion, and outputs the portion.

An image display unit 2007 displays the image received from the pixel converter 2006.

A detection operating unit 2008 includes a button to be pressed by the user.

When the button of the detection operating unit 2008 is pressed, the viewpoint detector 2005 detects the viewpoint data which is used as a reference viewpoint data.

The above described components are connected to one another with a bus line 2010. The image display unit 2007 and the pixel converter 2006 may be combined into a pixel-converting display unit 2012.

The image storage unit 2003 may include a storage medium, such as an HDD or a memory card.

The movement detector 2004 may be a movement detecting device, such as a gyro.

The viewpoint detector 2005 may be a distance measuring device using infrared ray.

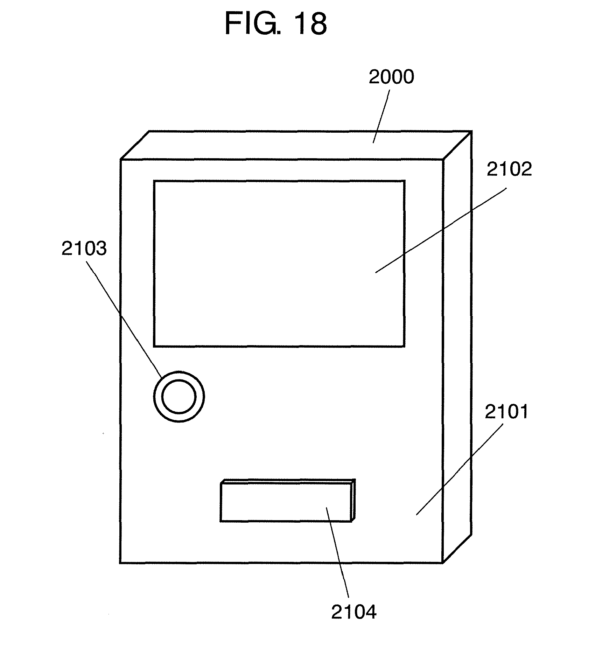

A front side of the portable viewer will be explained with referring to Fig. 18.

The user faces the front side 2101 of the portable viewer 2000 while using the viewer.

The image display unit 2007 has a display screen 2102 for displaying an image thereon.

The portable viewer 2000 includes a CCD camera 2103.

The detection operating unit 2008 includes an operation device 2104, such as a button.

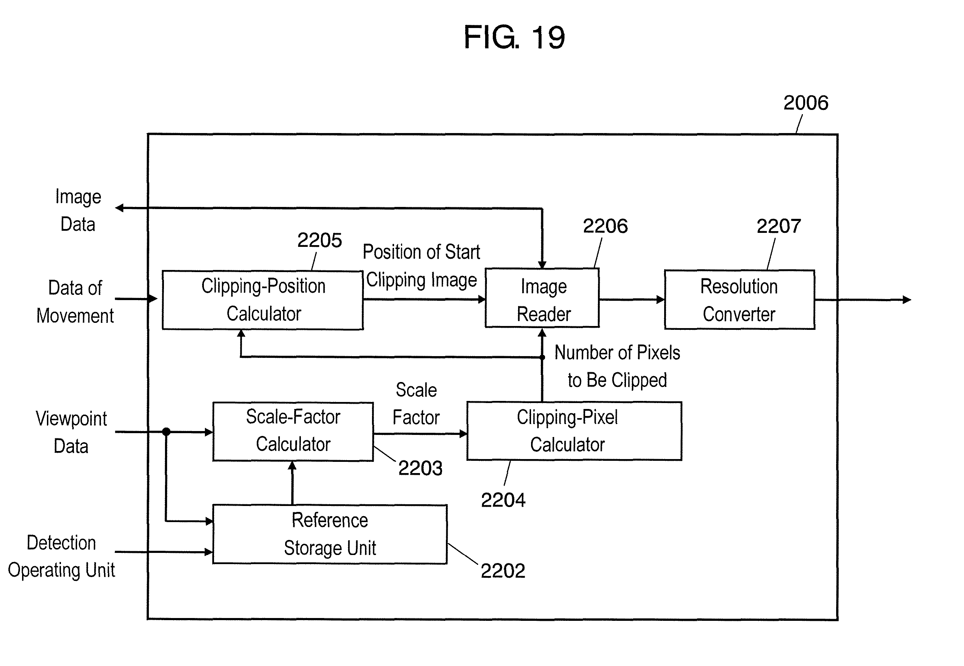

The pixel converter 2006 will be described in more detail with referring to Fig. 19.

The pixel converter 2006 includes a reference storage unit 2202, a clipping-position calculator 2205, a scale-factor calculator 2203, a clipping-pixel calculator 2204, an image reader 2206, and a resolution converter 2207.

The reference storage unit 2202 stores the viewpoint data received from the viewpoint detector 2005 when the operation device 2104 of the detection operating unit 2008 is pressed.

The reference storage unit 2202 outputs the viewpoint data stored therein. The scale-factor calculator 2203 calculates a scale factor based on the viewpoint data output from the viewpoint detector 2005 and the reference viewpoint data output from the reference storage unit 2202. The clipping-pixel calculator 2204 calculates the number of pixels to be clipped from the image based on the scale factor output from the scale-factor calculator 2203 and the resolution of the image display unit 2007.

The clipping-position calculator 2205 calculates the position in the image for of start clipping the image based on the data of the movement output from the movement detector 2004 and the number of pixels to be clipped output from the clipping-pixel calculator 2204. The image reader 2206 reads, from the image storage unit 2003, a portion of the image having pixels specified by the position for stating the clipping output from the clipping-position calculator 2205 and the number of the pixels output from the clipping-pixel calculator 2204. The resolution converter 2207 converts the image output from the image reader 2206 into an image having the resolution of the image display unit 2007.

A table used in the scale-factor calculator 2203 for calculating the scale factor will be explained with referring to Table 3.

Table 3

| Viewpoint Difference (cm) | Scale Factor |
|---|---|
| -25 | 1 |
| -20 | 1 |
| -15 | 1 |
| -10 | 0.8 |
| -5 | 0.64 |
| 0 | 0.51 |
| 5 | 0.41 |
| 10 | 0.32 |
| 15 | 0.26 |
| 20 | 0.26 |
| 25 | 0.26 |

The viewpoint difference indicated in the left column of Table 3 is calculated by subtracting the reference viewpoint data stored in the reference storage unit 2202 from the viewpoint data output from a distance calculator (not shown) of the viewpoint detector 2005.

The scale factor indicated in the right column of Table 3 represents values corresponding to values of the viewpoint difference.

The viewpoint detector 2005 has a structure identical to that of the viewpoint detector 105 of Embodiment 1 shown in Fig. 7.

In the case that the viewpoint data is 10 cm and the reference viewpoint data stored in the reference storage unit 2202 is 15 cm, the difference between them is calculated as -5. Then, the viewpoint difference is determined to be -5. The viewpoint difference of -5 corresponds to the scale factor of 0.64, thus determining the scale factor as 0.64.

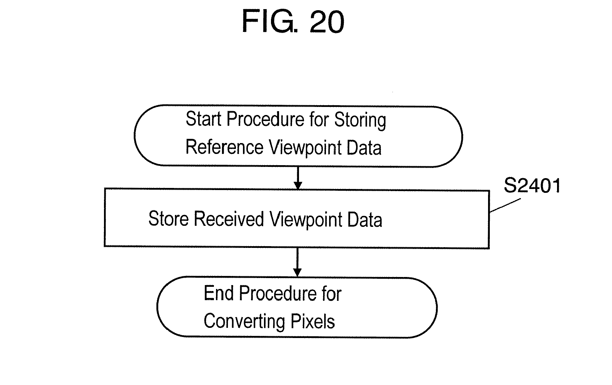

A procedure executed by the pixel converter 2006 for storing the reference viewpoint data will be explained with referring to Figs. 17 to 20.

The procedure for storing the reference viewpoint data starts when the operation device 2104 of the detection operating unit 2008 is pressed.

Upon the operation device 2104 being pressed, the reference storage unit 2202 stores received viewpoint data as the reference viewpoint data. If the reference viewpoint data has been stored, the data is updated (Step S2401).

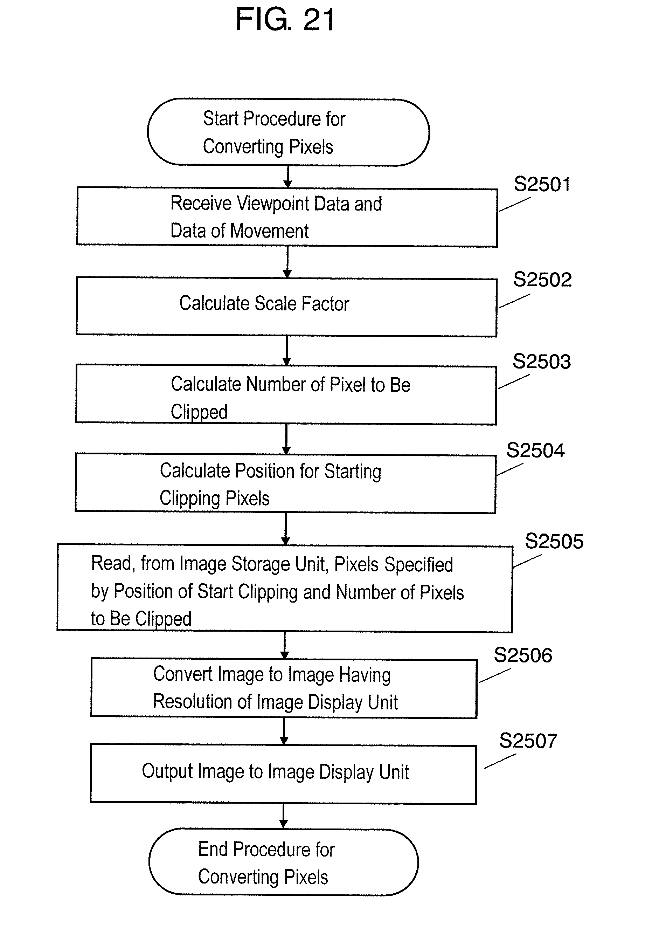

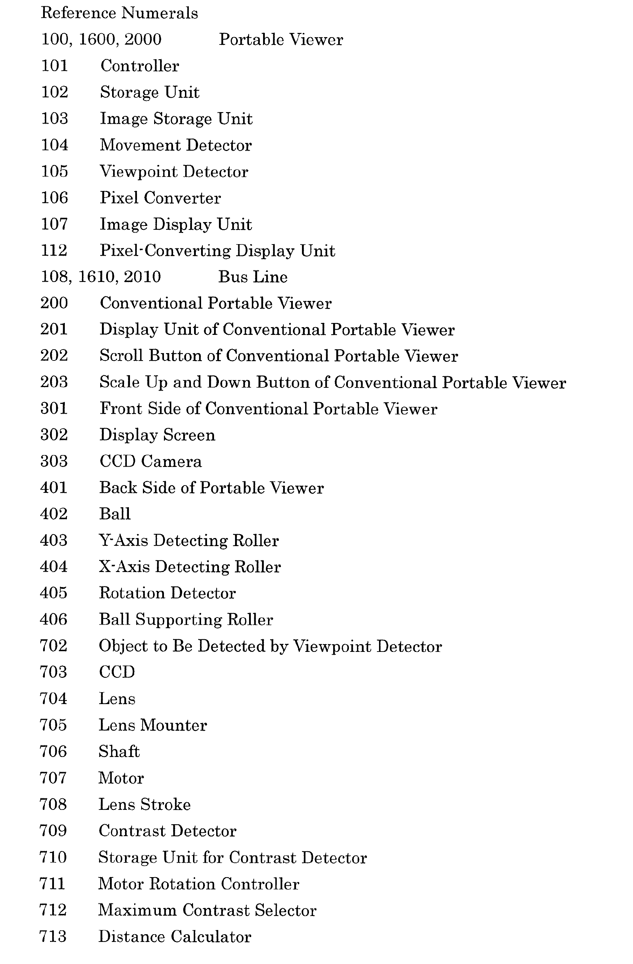

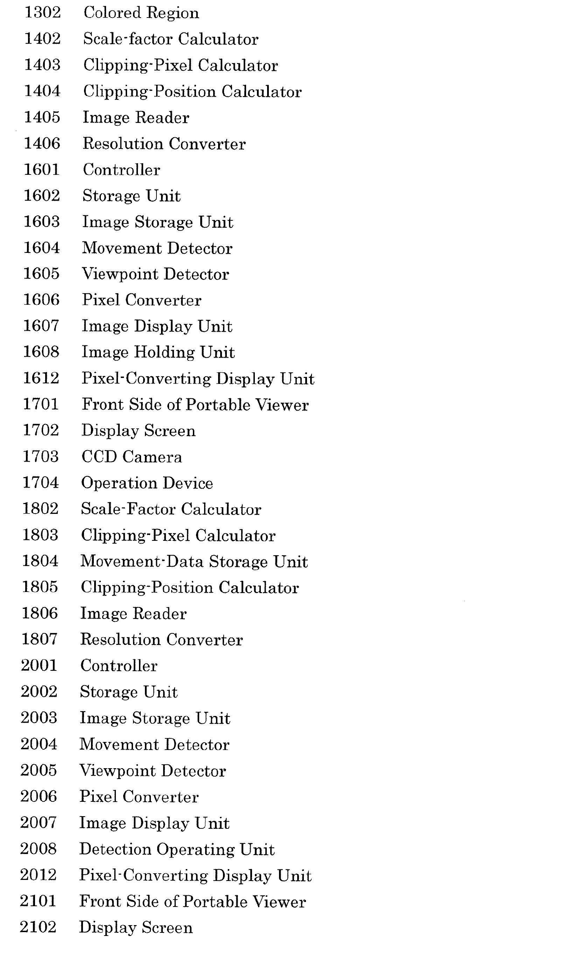

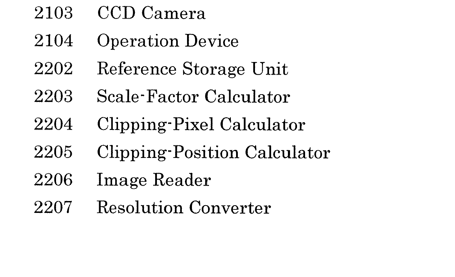

A procedure executed by the pixel converter 2006 for converting pixels will be explained with referring to Fig. 21.

The scale-factor calculator 2203 receives the viewpoint data from the viewpoint detector 2005. The clipping-position calculator 2205 receives the data of the movement from the movement detector 2004 (Step S2501).

Then, the scale-factor calculator 2203 calculates the scale factor based on the difference provided by subtracting the reference viewpoint data output from the reference storage unit 2202 from the received viewpoint data (Step S2502).

Then, the clipping-pixel calculator 2204 calculates the number of pixels to be clipped from the image (Step S2503).

Then, the clipping-position calculator 2205 calculates the position of start clipping the image based on the data of the movement and the number of the pixels to be clipped output from the clipping-pixel calculator 2204 (Step S2504).

Then, the image reader 2206 reads, from the image storage unit 2203, a portion of the image specified by the position of start clipping the image received from the clipping-position calculator 2205 and the number of the pixels to be clipped received from the clipping-pixel calculator 2204 (Step S2505).

Then, the resolution converter 2207 converts the image clipped at Step S2505 into an image having the resolution to the image display unit 2207 (Step S2506).

Then, the resolution converter 2207 outputs the image converted at Step S2506 to the image display unit 2007 (Step S2507).

As described, the portable viewer according to this embodiment further includes the detection operating unit 2008 and the reference storage unit 2202 in the pixel converter 2006, as compared with the portable viewer of Embodiment 1.

This structure allows the user to scroll the image by moving the portable viewer. The user can scale up and down the image by moving his/her face to and away from the portable viewer. Further, the user can change the reference viewpoint, a reference of the scale factor, to a position predetermined by the user.

The portable viewer according to each of the embodiments may be a mobile telephone having a camera function.

As apparent from the description of each embodiment, Embodiments 1, 2, and 3 may be combined. For example, the portable viewer of Embodiment 1 may includes the image holding unit and the detection operating unit while the pixel converter may include the movement-data storage unit and the reference storage unit.

In the portable viewer of each embodiment, at least one of the controller, the movement detector, the viewpoint detector, the pixel converter, and the image display unit may be implemented by software.

The portable viewer, a mobile phone, according to each embodiment, the image storage unit may store received image data. In the portable viewer, having a function of reading data from an external memory, the image storage unit may store image data read from the external memory.

INDUSTRIAL APPLICABILITY

A video device according to the present invention scales up and down an image by actions, such as the moving of the device or the moving of the face of a user to and from the device. Accordingly, the video device according to the present invention is useful as a mobile telephone or a PDA.

**Claims**

1. A video device having a screen for displaying an image thereon, said video device comprising:

> an image storage unit for storing an image to be displayed;
> a movement detector for detecting movement of said video device;
> a position detector for detecting a position of a user; and
> a pixel-converting display unit operable to
> read the image from the image storage unit,
> clip, scale up, and scale down a portion of the image based on the movement detected by the movement detector and the position detected by the position detector, and
> display the portion of the image.

2. The video device according to claim 1, wherein the position detector includes a camera provided at a front side of said video device, and the camera detects the position of the user.

3. The video device according to claim 2, wherein the camera detects the position of the user based on a change of a contrast value detected by the camera.

4. The video device according to claim 2, wherein the camera detects the position of the user based on an outline of a face of the user detected by the camera.

5. The video device according to claim 2, wherein the camera detects the position of the user based on a shape of an eye of the user detected by the camera.

6. The video device according to claim 1, wherein the position detector includes an infrared-ray transceiver provided at a front side of said video device, and the infrared ray transceiver detects the position of the user.

7. The video device according to claim 1, further comprising a detection operating unit for determining a reference position to detect the position of the user, wherein the image-converting display unit is operable to scale up and down the portion of the image based on comparison between the reference position and the position of the user.

8. The video device according to claim 1, further comprising an image holding unit operable to stop updating the portion of the image.

9. The video device according to claim 7, further comprising an image holding unit operable to stop updating the portion of the image.

10. The video device according to any one of claims 1 to 9, wherein said video device is a mobile telephone having a camera function.

# FIG. 1

100

101
Controller

102
Storage Unit

103
Image
Storage Unit

108

104
Movement
Detector

105
Viewpoint
Detector

112

106
Pixel
Converter

107
Image
Display Unit

# FIG. 2

200

201

202

Up

Left

Right

Down

203

Scale
Up

Scale
Down

# FIG. 3

100

302

303

301

# FIG. 4

100

405

Rotation
Detector

403

402

401

Y-Axis

406

404

X-Axis

# FIG. 5

104

403

405

Y-Axis Detecting
Roller

Rotation
Detector

Data of
Movement

404

X-Axis Detecting
Roller

# FIG. 6

Start Procedure for
Detecting Movement

Rotation Detector Detects
Rotation of Each Roller — S601

Convert Rotation to
Data of Movement — S602

End Procedure for
Detecting Movement

# FIG. 7

710
Storage Unit for Contrast Detector

105

709

Contrast Detector

Maximum Contrast Selector
712

Distance Calculator

704

703

702

Motor Rotation Controller

Viewpoint Data

713

711

706 705

707

1.0cm          0.0cm

708

EP 1 788 474 A1

# FIG. 8

Start Procedure for
Detecting Viewpoint

Move Lens to Maximum Distance — S801

Store Contrast Value — S802

S803

Lens at Minimum
Distance? → No → Decrease Position of Lens by
Predetermined Distance — S804

Yes

Select Position of Lens with
Maximum Contrast Value — S805

Calculate Viewpoint Based on
Position of Lens — S806

Output Viewpoint — S807

End Procedure for
Detecting Viewpoint

# FIG. 9

Number of Pixels along X-Axis = 640 (pixels)
Width along X-Axis = 6.4 (cm)

Number of Pixels along Y-Axis = 480 (pixels)
Hight along Y-Axis = 4.8 (cm)

302

# FIG. 10

302

1302

FIG. 11

# FIG. 12

Start Procedure for
Converting Pixels

Receive Viewpoint Data and
Data of Movement — S1501

Calculate Scale Factor — S1502

Calculate Number of Pixel to Be
Clipped — S1503

Calculate Starting Position to Clipping
Pixels — S1504

Read, from Image Storage Unit, Pixels Specified
by Position for Starting Clipping and Number of Pixels
to Be Clipped — S1505

Convert number of Pixel of the Image to have
the same resolution as Display Unit — S1506

Output Image to Image Display Unit — S1507

End Procedure for
Converting Pixels

# FIG. 13

1600

| 1601 | 1602 | 1603 | 1608 |
|------|------|------|------|
| Controller | Storage Unit | Image Storage Unit | Image Holding Unit |

1610

| 1604 | 1605 | 1606 | 1607 |
|------|------|------|------|
| Movement Detector | Viewpoint Detector | Pixel Converter | Image Display Unit |

1612

# FIG. 14

1600

1702

1703

1701

1704

# FIG. 15

Image Data

Data of Movement

Data of Opeartion for Holding Image

Viewpoint Data

1606

1804 Movement-Data Storage Unit

1805 Clipping-Position Calculator

Position of Start Clipping image

1806 Image Reader

1807 Resolution Converter

Number of Pixels to Be Clipped

Scale Factor

1802 Scale-Factor Calculator

Scale Factor

1803 Clipping-Pixel Calculator

EP 1 788 474 A1

# FIG. 16

Start Procedure for
Converting Pixels

Receive Viewpoint Data and
Data of Movement — S1901

Is Image Holding
Unit Activated? — S1902

Yes

No

Store Data of Movement to Be
Used for Calculation — S1903

Calculate Scale Factor — S1904

Calculate Number of Pixel to Be
Clipped — S1905

Calculate Position for Starting
Clipping Pixels — S1906

Read, from Image Storage Unit, Pixels Specified
by Position of Start Clipping and Number of Pixels
to Be Clipped — S1907

Convert Image to Image Having
Resolution of Image Display Unit — S1908

Output Image to Image Display Unit — S1909

End Procedure for
Converting Pixels

# FIG. 17

2000

2001     2002     2003     2008

| Controller | Storage Unit | Image Storage Unit | Detection Operating Unit |

2010

| Movement Detector | Viewpoint Detector | Pixel Converter | Image Display Unit |

2004     2005     2012     2006     2007

# FIG. 18

2000

2102

2103

2101

2104

# FIG. 19

Image Data

Data of Movement

Viewpoint Data

Detection Operating Unit

2006

2205 — Clipping-Position Calculator

Position of Start Clipping Image

2206 — Image Reader

2207 — Resolution Converter

Number of Pixels to Be Clipped

Scale Factor

Scale-Factor Calculator

2203

Clipping-Pixel Calculator

2204

Reference Storage Unit

2202

EP 1 788 474 A1

# FIG. 20

```
   ┌─────────────────────────────────┐
   │    Start Procedure for Storing   │
   │    Reference Viewpoint Data      │
   └─────────────────────────────────┘
                    │
                    ▼                        S2401
   ┌─────────────────────────────────┐
   │   Store Received Viewpoint Data  │
   └─────────────────────────────────┘
                    │
                    ▼
   ┌─────────────────────────────────┐
   │        End Procedure for         │
   │        Converting Pixels         │
   └─────────────────────────────────┘
```

# FIG. 21

Start Procedure for
Converting Pixels

Receive Viewpoint Data and
Data of Movement — S2501

Calculate Scale Factor — S2502

Calculate Number of Pixel to Be
Clipped — S2503

Calculate Position for Starting
Clipping Pixels — S2504

Read, from Image Storage Unit, Pixels Specified
by Position of Start Clipping and Number of Pixels
to Be Clipped — S2505

Convert Image to Image Having
Resolution of Image Display Unit — S2506

Output Image to Image Display Unit — S2507

End Procedure for
Converting Pixels

Reference Numerals

| | |
|---|---|
| 100, 1600, 2000 | Portable Viewer |
| 101 | Controller |
| 102 | Storage Unit |
| 103 | Image Storage Unit |
| 104 | Movement Detector |
| 105 | Viewpoint Detector |
| 106 | Pixel Converter |
| 107 | Image Display Unit |
| 112 | Pixel-Converting Display Unit |
| 108, 1610, 2010 | Bus Line |
| 200 | Conventional Portable Viewer |
| 201 | Display Unit of Conventional Portable Viewer |
| 202 | Scroll Button of Conventional Portable Viewer |
| 203 | Scale Up and Down Button of Conventional Portable Viewer |
| 301 | Front Side of Conventional Portable Viewer |
| 302 | Display Screen |
| 303 | CCD Camera |
| 401 | Back Side of Portable Viewer |
| 402 | Ball |
| 403 | Y-Axis Detecting Roller |
| 404 | X-Axis Detecting Roller |
| 405 | Rotation Detector |
| 406 | Ball Supporting Roller |
| 702 | Object to Be Detected by Viewpoint Detector |
| 703 | CCD |
| 704 | Lens |
| 705 | Lens Mounter |
| 706 | Shaft |
| 707 | Motor |
| 708 | Lens Stroke |
| 709 | Contrast Detector |
| 710 | Storage Unit for Contrast Detector |
| 711 | Motor Rotation Controller |
| 712 | Maximum Contrast Selector |
| 713 | Distance Calculator |

| 1302 | Colored Region |
|------|----------------|
| 1402 | Scale-factor Calculator |
| 1403 | Clipping-Pixel Calculator |
| 1404 | Clipping-Position Calculator |
| 1405 | Image Reader |
| 1406 | Resolution Converter |
| 1601 | Controller |
| 1602 | Storage Unit |
| 1603 | Image Storage Unit |
| 1604 | Movement Detector |
| 1605 | Viewpoint Detector |
| 1606 | Pixel Converter |
| 1607 | Image Display Unit |
| 1608 | Image Holding Unit |
| 1612 | Pixel-Converting Display Unit |
| 1701 | Front Side of Portable Viewer |
| 1702 | Display Screen |
| 1703 | CCD Camera |
| 1704 | Operation Device |
| 1802 | Scale-Factor Calculator |
| 1803 | Clipping-Pixel Calculator |
| 1804 | Movement-Data Storage Unit |
| 1805 | Clipping-Position Calculator |
| 1806 | Image Reader |
| 1807 | Resolution Converter |
| 2001 | Controller |
| 2002 | Storage Unit |
| 2003 | Image Storage Unit |
| 2004 | Movement Detector |
| 2005 | Viewpoint Detector |
| 2006 | Pixel Converter |
| 2007 | Image Display Unit |
| 2008 | Detection Operating Unit |
| 2012 | Pixel-Converting Display Unit |
| 2101 | Front Side of Portable Viewer |
| 2102 | Display Screen |

2103    CCD Camera

2104    Operation Device

2202    Reference Storage Unit

2203    Scale-Factor Calculator

2204    Clipping-Pixel Calculator

2205    Clipping-Position Calculator

2206    Image Reader

2207    Resolution Converter

## INTERNATIONAL SEARCH REPORT

| International application No. |
| --- |
| PCT/JP2005/016992 |

A. CLASSIFICATION OF SUBJECT MATTER
*G06F3/048* (2006.01), *G06F3/033* (2006.01), *G06F15/02* (2006.01)

According to International Patent Classification (IPC) or to both national classification and IPC

B. FIELDS SEARCHED

Minimum documentation searched (classification system followed by classification symbols)
*G06F3/048* (2006.01), *G06F3/033* (2006.01), *G06F15/02* (2006.01)

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2003-511786 A (MYORIGO OY),<br>25 March, 2003 (25.03.03),<br>Par. Nos. [0001] to [0010]; Figs. 2, 3<br>& EP 1228422 A1 & WO 2001/027735 A1<br>& FI 200001506 A & AU 200077926 A<br>& NO 200201647 A & CN 1379871 A<br>& RU 2242043 C2 | 1-10 |
| Y | JP 2002-366271 A (Sharp Corp.),<br>20 December, 2002 (20.12.02),<br>Full text; all drawings<br>(Family: none) | 1-10 |

☒ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>31 October, 2005 (31.10.05) | Date of mailing of the international search report<br>15 November, 2005 (15.11.05) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2005/016992 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | WO 1997/029589 A1 (Matsushita Electric Industrial Co., Ltd.), 14 August, 1997 (14.08.97), Description; page 18, lines 8 to 16; Fig. 4 & CN 1210648 A     & KR 99082285 A & KR 304803 B       & CN 1110189 C | 3 |

Form PCT/ISA/210 (continuation of second sheet) (April 2005)

**EP 1 788 474 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* JP 7295937 A